# EUROPEAN PATENT APPLICATION

(11) **EP 1 983 257 A1**
(43) Date of publication of application: **22.10.2008**
(21) Application number: 07106322.6
(22) Date of filing: 17.04.2007
(51) Int. Cl.: F21V 33/00, G02B 25/02

(54) **Illumination device**

(71) Applicant: Philips Intellectual Property & Standards GmbH, 20099 Hamburg (DE); Koninklijke Philips Electronics N.V., 5621 BA Eindhoven (NL)
(72) Inventor: The designation of the inventor has not yet been filed
(74) Representative: Golla-Franz, Anke Lucia

(57) **Abstract**

The invention relates to an illumination device (10) for illuminating a surface (101), with at least one lighting element (20) and an illuminating body (30), wherein the lighting element (20) emits an artificial light (21,21'), a housing element (40) comprises the lighting element (20) and supports the illuminating body (30), the illuminating body (30) comprises a transparent light conductive material and is generally overlying the surface (101), being illuminated.

The invention discloses, that the illuminating body (30) comprises a surface pattern (80), forming a Fresnel-type lens, optically magnifying the surface (101).

## Description

### FIELD OF THE INVENTION

This invention relates to an illumination device for illuminating a surface, with at least one lighting element and an illuminating body, wherein the lighting element emits an artificial light, a housing element comprises the lighting element and supports the illuminating body, the illuminating body comprises a transparent light conductive material and is generally overlying the surface, being illuminated.

### BACKGROUND OF THE INVENTION

In the US 6,951,403 B2 a device for illuminating a generally flat surface is described, which comprises a battery operated light source contained within a housing to which a transparent light conductive illuminating body is mounted. The device may be placed with the illuminating body over a book or other flat surfaces for illuminated viewing through the transparent illuminating body. The illuminating body is tapered in a wedge shape to deflect the conducted light onto the underlying surface. Unfortunately, the described device is less convenient for reading books, which possess in general a curved reading area. The interaction of the curved reading area with the tapered illuminating body leads to a deformed image of the illuminated page. In addition, the device is a relatively thick wedge shaped light guide where the thickness results in relatively high weight and this reduces ease of use. It also results in a relatively high mechanical stiffness making it very difficult to bend the device over a curved reading area.

Furthermore, there are magnification lenses known, which can be clipped onto the illumination devices described above. Unfortunately, such magnification elements possess a relatively small magnification. Another option to optically magnify a surface is to use a bar magnifier. This bar magnifier is often an acrylic body, possessing a curved top surface and thereby optically magnifying the surface on which the bar magnifier is lying. The disadvantage of such bar magnifier is their weight and the distortion of the image.

### SUMMARY OF THE INVENTION

Thus, the invention has for its object to eliminate the above mentioned disadvantages. In particular, it is an object of the invention to provide an efficient and cheap illumination device, which combines a sufficient magnification for convenient reading with a small overall thickness.

This object is achieved by an illumination device for illuminating a surface as taught by claim 1 of the present invention. Advantageous embodiments of the illumination device for illuminating a surface are defined in the subclaims.

The invention discloses that the illuminating body comprises a surface pattern, forming a Fresnel-type lens, optically magnifying the surface.

Within the scope of the invention, a lighting element and an illuminating body are disclosed, wherein the illuminating body comprises a Fresnel-type lens. By breaking the lens into a set of refractor means a Fresnel-type lenses achieve a high magnification with a reduced amount of material needed compared to conventional spherical lenses. As each refractor mean itself forms a spherical lens, the combination of all refractor means leads to a large area magnification lens, which possesses a small thickness. As effectively the continuous surface of a standard lens is chopped into a set of surfaces of the same or different curvature, the overall thickness of the lens is decreased, allowing a substantial reduction in thickness of the lens. These refractor means may have straight or curved profiles with constant or random spacing and may even vary from microns to millimeters in dimension. The arrangement of the refractor means and therefore the configuration of the surface pattern may be circular, linear or have a non uniform pattern.

Furthermore, the refractor means may possess a cross-section which is equal to a line-up of small triangles, trapeze or parallelograms. The refractor means may possess a homogeneous design throughout the surface of the illuminating body. In another preferred embodiment the design of the refractor means may change along the main axis of the illuminating body.

In another preferred embodiment each refractor mean comprises a saw tooth like cross-section. To achieve the needed magnification each refractor mean comprises a facet surface and a relief surface. The facet surface ramps upwards as the distance to an optical axis decreases. Subsequent, the relief surface sharply falls towards a base of the surface pattern. So the saw tooth like structure is built, possessing a triangular shape. The angle between the base of the surface pattern and the facet surface may be between 0° to 30°, and with bigger diameter lenses it may even extend to 40° and even 50°. The pitch of the saw-tooth like structure may be between 1 mm and 10 microns, more preferably between 200 microns and 50 microns to render it invisible to the human eye.

The disclosed illumination device comprises the ability to illuminate and to optically magnify a surface. Therefore in another preferred embodiment the surface pattern is arranged on one of the surfaces of the illuminating body. Preferably the surface pattern covers the top or bottom surface of the illuminating body. If - for example - a user wants to read a book the illuminating body has to be held above the pages so that the text can optically be magnified. As the magnification is a function of the distance between the object - e.g. the text - and lens and the focal distance of the lens, the illuminating body has to be held above the object in distance between 10 mm and 100 mm to achieve a magnification between 1.15 and 8 times, if the lens possesses a focal distance between 50 mm and 300 mm. In another preferred embodiment the illuminating body and the surface pattern are one-piece.

In another preferred embodiment the surface pattern is configured on the one hand to optically magnify the surface and on the other hand to receive and to deflect the artificial light emitted by the lighting element onto the surface. The disclosed illumination device combines the ability to illuminate and to magnify the surface. If the lighting element of the disclosed illumination device is arranged on one of the side surfaces of the illuminating body it injects the artificial light into the illuminating body. The grooves that constitute the surface pattern act as a light extraction feature. The artificial light is collected within the illuminating body and leaves it through the relief surface of the surface pattern. So a homogeneous illumination of the surface lying beneath the illuminating body is possible. This ability is combined with the magnification of the surface.

If a normal light source is used for reading e.g. a book, it may disturb others, especially if used in bedrooms. To avoid disturbing others, the illumination device described in this invention may be used as a reading light. Therefore it is important, that the emitted artificial light illuminates just the page of the book and not the surrounding. Thus, the lighting element should be mounted to one of the side faces of the illuminating body. The light injected into one of the side faces has to be deflected, so that as much light as possible leaves through the bottom side of the illuminating body, being above the sheet of e.g. the book. Therefore, the surface pattern which deflects the artificial light has to be transparent for the light reflected by the surface of the sheet, so that the text, being covered by the illuminating body is lighted up and can easily be viewed by a person. Additionally, the surface pattern may be transparent for an ambient light, falling onto the light extraction layer.

As has been described, the lighting element may be arranged on one of the side faces of the illuminating body. To achieve a crossover of the artificial light emitted by the lighting element into the illumination body with a low attenuation, the lighting element may be glued onto the side face of the illuminating body. Preferably the used glue possesses the same index of refraction as the material of the illuminating body. Therefore no scattering, deflection or attenuation will occur. In another preferred embodiment the lighting element is arranged adjacent to the side face of the illuminating body, but an illumination gap is arranged between the lighting element and the side face. In this arrangement a fraction of the artificial light is injected into the illumination body, whereas the other fraction is directly illuminating the surface, lying beneath the illumination device. The fraction of light not injected into the illumination body, but directly illuminating the surface is determined by the size of the illumination gap. Furthermore, to increase or decrease the fraction of artificial light directly illuminating the surface an additional lens may be mounted within the lighting element. This lens may focus or disperse the artificial light.

Preferably, the lighting element is at least one of the following: a LED, an OLED, an incandescent lamp or a fluorescent lamp. Depending on the type of usage of the illumination device, a single or a plurality of lighting elements can be used. A light emitting diode (LED) is a semiconductor device that emits incoherent narrow spectrum light (typically in the order of 10-20 nm) when electrically biased in the forward direction. The color of the emitted light depends on the composition and the condition of the semiconducting material used. Moreover, phosphor converted LEDs can be used. In that case, also the phosphor(s) influence(s) the color and spectrum of the emitted light. The also applicable organic light emitting diode (OLED) is a special type of a LED, in which the emissive layer comprises a thin film of certain organic components. The advantage of the OLED is that it is a homogeneous large area light source with potentially low costs and high efficiency. The OLEDs utilize current flowing through a thin film of organic material to generate the light. The color of light being emitted and the efficiency of the energy conversion from current to light are determined by the composition of the organic thin film material.

In a preferred embodiment the illuminating body covers an area, respectively comprises a size of at most 300 cm², preferably less than 100 cm². If the illuminating device is used as a reading light, it has to be small and lightweight, so that it can be conveniently used. As perception research has shown, a lit area of about 1 cm x 5 cm is already convenient for reading. As a result, LEDs with a power consumption of less than 50 mW, preferably less than 10 mW are sufficient to achieve an illumination level of preferably 25 - 2000 lux, more preferred 50 - 250 lux and most preferred larger than 75 lux.

In another preferred embodiment the lighting element is arranged beneath the illumination body. In this arrangement the artificial light is not injected into the illumination body but illuminates the surface directly. To focus the artificial light onto the surface a lens may be embedded into the lighting element. This embodiment has the advantage that no optically difficult connections between the lighting element and the illuminating body have to be established. Furthermore, the material used for the surface pattern has not to be chosen with respect to its ability to receive and to deflect the artificial light. Thus, a cheap and simple illumination device is achieved, which can be used to optically magnify and illuminate even a large surface.

In another preferred embodiment the illuminating body comprises a light extraction layer, configured to receive and to deflect the artificial light from the lighting element onto the surface. In this embodiment the ability of the surface pattern to receive and to deflect artificial light is enhanced by the light extraction layer. Preferably the light extraction layer covers the top side of the illuminating body not facing the surface, whereas the surface pattern covers the bottom side of the illuminating body next to the surface to be illuminated. In this configuration the surface pattern optically magnifies the surface, whereas the light extraction layer deflects the artificial light being injected from one of the side surfaces of the illuminating body. Due to the assignment of individual tasks, the surface pattern as well as the light extraction layer can be optimally designed. To use the illumination device as a reading light, the light extraction layer which deflects the artificial light has to be transparent for the light reflected by the surface of the sheet.

In another preferred embodiment the illumination body comprises a first section and a second section, wherein at least a part of the first section is covered with the surface pattern and wherein at least a part of the second section is covered with the light extraction layer. In contrast to the above described embodiments the parts of the illuminating body which are covered with the light extraction layer and the surface pattern are disjunctive. If used as a reading light the illuminating body may comprise an inner segment, which is the first section, covered with the surface pattern and therefore magnifying the surface lying beneath the illumination device. This first section may be surrounded by the second section, used to receive and to deflect the artificial light emitted by the lighting element. To achieve a homogeneous illumination of the surface, the surface structure of the light extraction layer may deflect the artificial light in such a way, that it leaves the illuminating body under an angle, heading towards the center of the illuminating body and therefore illuminating the surface lying beneath the first section. This embodiment has the advantage that different materials can be used for the first respectively second section.

In another preferred embodiment a plurality of lighting elements are positioned on the outer edge of the illuminating body. Thus, a homogeneous illumination of the illuminating body and/or the surface is achievable. The artificial light emitted by each of the lighting elements may either be directly emitted onto the surface or be injected into the illumination body, and afterwards deflected onto the surface. These embodiments have the advantage that because of the large number of lighting elements used, each of the lighting elements may possess just a small light output. Therefore the produced heat and the needed energy consumption of each lighting element is small. Furthermore, due to the reduced size of the lighting elements the rim, bearing the illuminating body and containing the lighting elements, may be small. Therefore a convenient handling of the illumination device is possible.

The object of the invention is also achieved by a mounting to bear an illumination device according to the described embodiments, wherein the mounting positions the illumination device in a distance from the surface, so that the surface can be viewed magnified. Therefore the mounting has to have a mounting mean to which the illumination device is connected. The mounting mean may be a clip like connection, enabling the illumination device to be connected and disconnected to the mounting mean as required. Furthermore, the mounting mean may comprise a distance element, positioning the illumination device within a distance from the object to be viewed, so that the desired magnification is achieved by the surface pattern.

The aforementioned illuminating device, as well as claimed components and the components to be used in accordance with the invention in the described embodiments, are not subject to any special exceptions with respect to size, shape, material selection. Technical concept such that the selection criteria are known in the pertinent field can be applied without limitations. Additional details, characteristics and advantages of the object of the present invention are disclosed in the subclaims and the following description of the respective figures - which are an exemplary fashion only - showing a plurality of preferred embodiments of the illumination device according to the present invention.

### BRIEF DESCRIPTION OF THE DRAWINGS

Theses figures are:
- Figure 1: shows an illumination device with an illuminating body and a lighting element,
- Figure 2: shows the illumination device with an illumination gap between the lighting element and the illuminating body,
- Figure 3: shows a cut-out of the illuminating body of Figure 2,
- Figure 4: shows another embodiment of the illumination device,
- Figure 5: shows a top view of the illumination device of Figure 4,
- Figure 6: shows another embodiment of the illumination device,
- Figure 7: shows the illuminating body with two rows of the lighting elements and
- Figure 8: shows the illuminating body surrounded by a plurality of lighting elements.

### DETAILED DESCRIPTION OF EMBODIMENTS

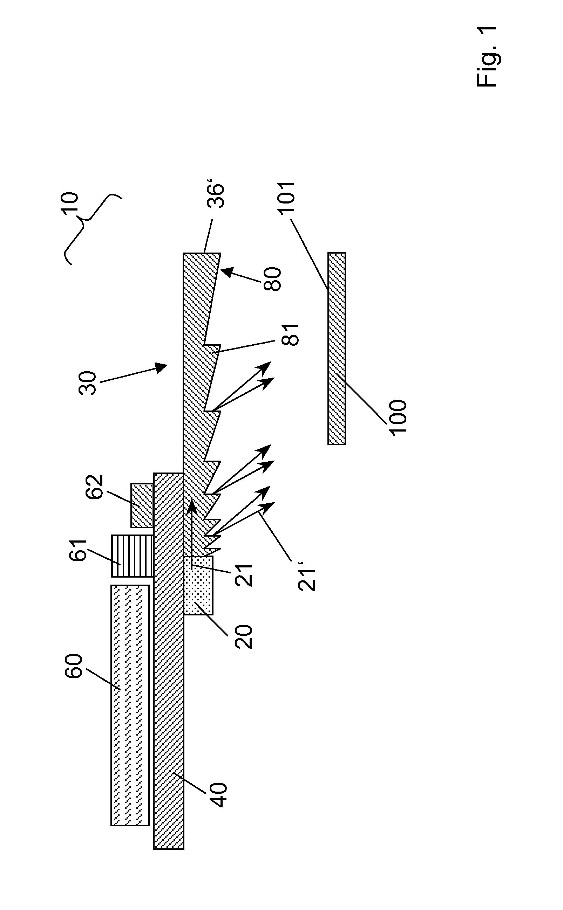

In Figure 1 an illumination device 10 for illuminating a surface 101 of an object 100 is shown. The illumination device 10 comprises a lighting element 20 and an illuminating body 30. The lighting element 20 is arranged subjacent to a housing element 40, which supports the illuminating body 30. In the shown embodiment the illumination device 10 is a reading light, used to illuminate the generally flat surface 101 of the object 100, such as a page of a book lying subjacent to the illuminating body 30. To optically magnify the surface 101 the illumination body 30 comprises a surface pattern 80 forming a Fresnel-type lens. Such Fresnel-type lenses can achieve a large magnification without the need of a rather thick illumination body 30.

The lighting element 20 is a LED, which injects the artificial light 21 into the illuminating body 30. The lighting element 20 is connected with the holding element 40, which may be a printed circuit board (PCB). Such printed circuit boards are used to mechanically support and electrically connect electronic components, using conductive pathways, etched from copper sheets laminated onto a non-conductive substrate. Such structures are known to be inexpensive and highly reliable. Furthermore, the LED can directly be connected to the electronic components with the help of the PCB. Opposite to the lighting element 20 a driver 62 and a battery 61 are installed on the housing element 40. The battery 61 is preferably rechargeable and delivers the needed current for the lighting element 20. The driver 62 may include a current amplifying circuit and a waveform generating and controlling circuit, which outputs the desired waveform. Also, the waveforms amplitude, frequency and duty ratio are adjusted by the waveform generating and controlling circuit.

To use the illumination device 10 in regions of the earth, where electrical power is difficult to get or expensive, a solar cell 60 may be embedded onto the housing element 40. The solar cell 60 converts photons from the solar light into electricity, stored in the rechargeable battery 61. So if the illumination device 10 is exposed to solar light during the daytime, the illumination device 10 can be used in the dark. To gain an illumination device 10 which in spite of the solar cell 60 is able to illuminate the surface 101 for a long period of time, a lighting element 20 with low power consumption is needed. LEDs have been shown to be appropriate, because they achieve a sufficient light level with low power consumption.

As has been experimentally measured, the surface pattern 80 not only leads to an optical magnification of the surface 101, but also to a guiding of the artificial light 21, injected by the lighting element 20. Therefore the surface pattern 80 of the illuminating body 30 satisfies two tasks. On the one hand the surface pattern 80 optically magnifies the surface 101. On the other hand the surface pattern 80 is formed by a plurality of refractor means 81, possessing a light extraction feature. The artificial light 21 is bunched towards the refractor means 81 and emitted onto the surface 101. Therefore the named surface 101 is illuminated and at the same optically magnified.

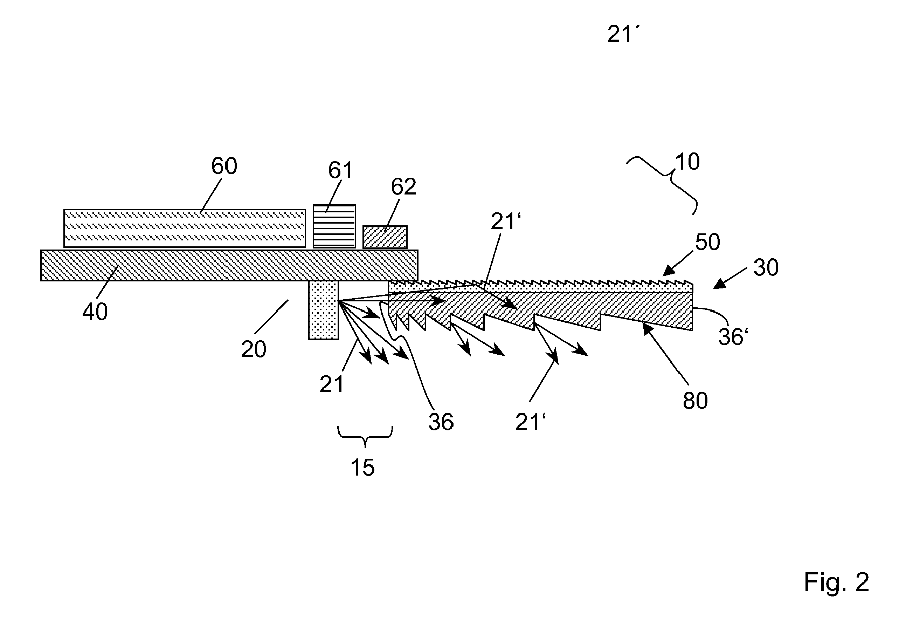

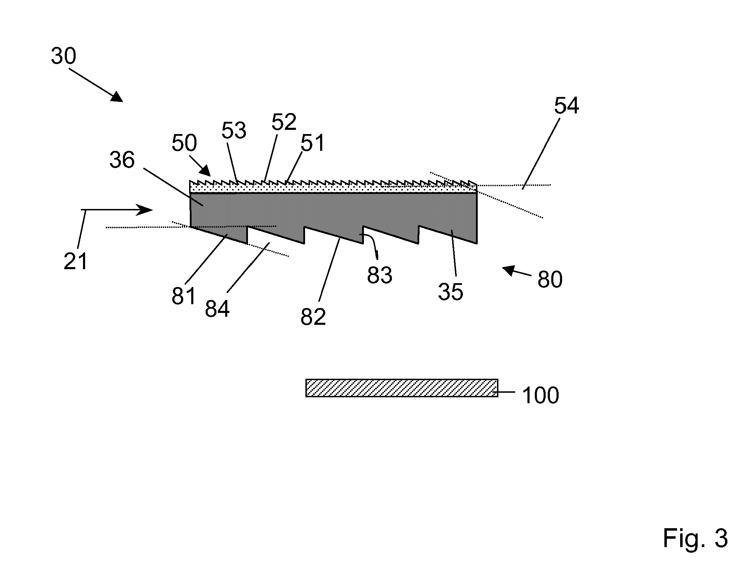

To reduce the amount of artificial light 21, not being deflected onto the surface 101 but scattered in the surrounding, the invention discloses a light extraction layer 50. The configuration of the light extraction layer 50 is shown in the Figures 2 and 3, the last only illustrating the illuminating body 30. The artificial light 21 is injected from the left side into the illuminating body 30. To deflect the artificial light 21 onto the surface 101, being positioned subjacent to the illumination body 30 the light extraction layer 50 possesses a surface structure. This surface structure comprises a plurality of deflection means 51, which are arranged in a consecutive manner. Each deflection mean 51 may possess a saw tooth like cross-section with a flange 53, sharply rising from the illuminating body 30. Subsequent, the deflection mean 51 possesses a face 52, which ramps downwards as the distance to the lighting element 20 increases. The face 52 possesses an angle 54, measured with respect to the longitudinal extension of the illuminating body 30. Depending on the wavelength of the artificial light 21 and on the index of refraction of the material used for the illuminating body 30 the angle 54 should be between 0.1° to 5°, preferably between 0.25° and 2°.

The surface pattern 80, needed to enlarge the appearance of the surface 101, comprises a plurality of refractor means 81. Each refractor mean 81 is arranged in a consecutive manner covering a bottom surface 35 of the illuminating body 30. In the shown embodiment each refractor mean 81 possesses a saw tooth like cross-section with a flange 83, sharply rising from the illuminating body 30. Subsequent the refractor mean 81 possesses a facet surface 82 which ramps downwards as the distance to the lighting element 20 decreases. Therefore the saw tooth like structure is inverse to those of the extraction layer 50. To achieve a homogeneous magnification of the surface 101 the refractor means 81 may be arranged in a non homogeneous manner. Furthermore, the angle 84 between the facet surface 82 and the longitudinal axis of the illuminating body 30 may change with respect to the distance to the lighting element 20. The refractor means 81 may be arranged in a linear structure, so that the surface pattern 80 may comprise of a plurality of rows of refractor means 81. In another embodiment the surface pattern 80 may comprise a plurality of concentric annular arranged refractor means 81. The so formed Fresnel lens may also be corrected for spherical aberration.

The lighting element 20 shown in Figure 2 is not in direct contact with the illuminating body 30. Rather than that, an illumination gap 15 is arranged between the lighting element 20 and the side face 36 of the illuminating body. Therefore a part of the artificial light 21' will be injected into the illuminating body 30. The other part of the artificial light 21 will be directly emitted onto the surface 101. This embodiment has the advantage that direct light 21 as well as indirect light 21' are used to illuminate the surface. This results in a very homogeneous illumination, enhancing the contrast and the readability of a book lying beneath the illumination device 10.

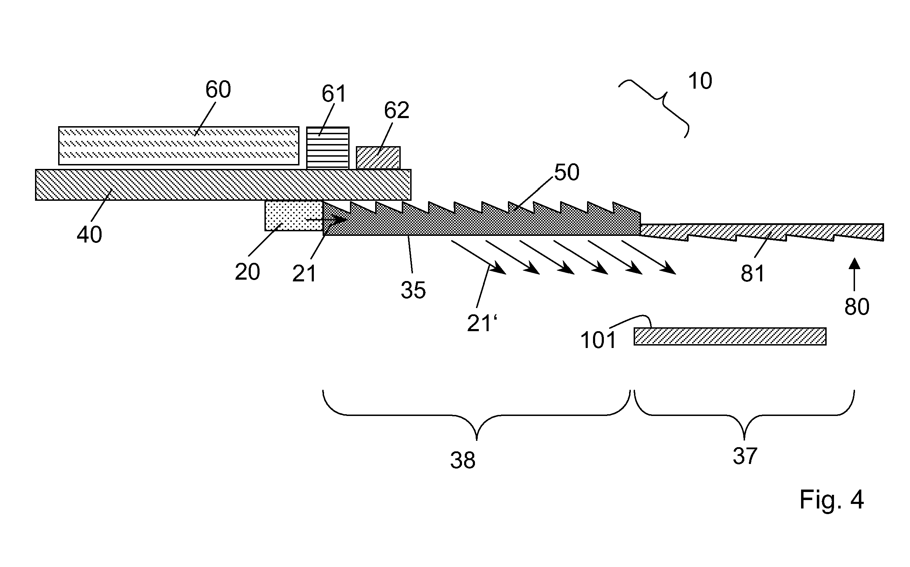

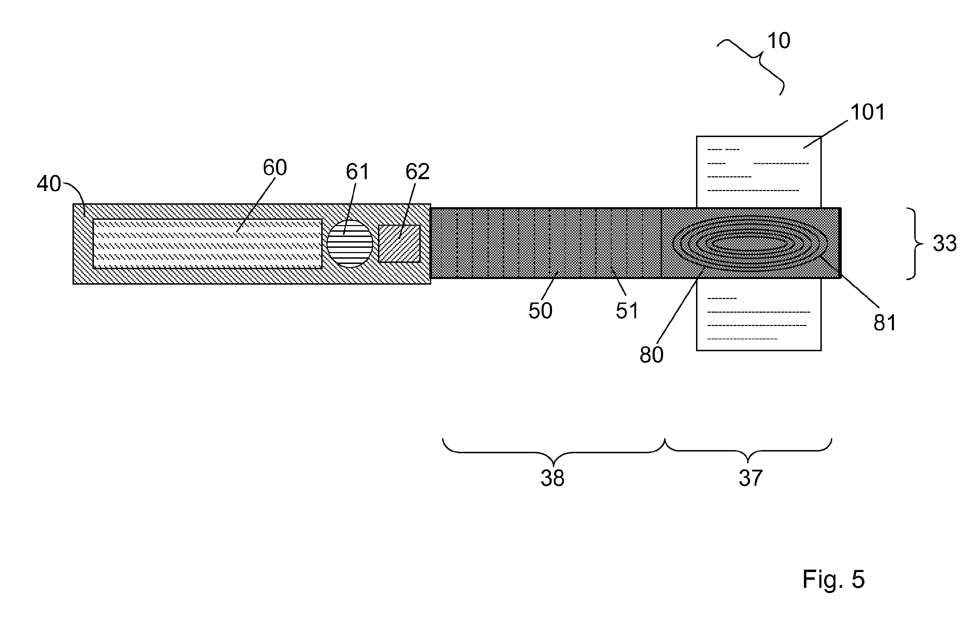

In Figure 4 another embodiment of the illumination device 10 is shown. The illuminating body 30 is divided into a first section 37 and a second section 38. The underside of the first section 37 of the illuminating body 30 is covered with the surface pattern 80, forming a Fresnel-type lens. Therefore an object 100, lying beneath the first section 37 is optically magnified. To illuminate the object 100 respectively the surface 101, the second section 38 of the illuminating body 30 comprises a light extraction layer 50. Artificial light 21 being injected into the illuminating body 30 is received and deflected by the light extraction layer 50 and guided onto the surface 101. As the surface 101 is lying beneath the first section 37 and not beneath the second section 38, the artificial light 21' is deflected sidewise. As Figure 4 illustrates the deflected artificial light 21' is emitted from the second section 38 but illuminating the surface 101 lying under the first section 37. This arrangement is clarified by Figure 5, showing an oversight of the illumination device 10 of Figure 4. The object 100 with its surface 101 is lying underneath the first section 37 of the illuminating body 30. Onto respectively within the illuminating body 30 the refractor means 81 of the surface pattern 80 are arranged in a concentric annular way. As the illuminating body 30 possesses a width 33 which is smaller than the size of the surface 101 only the underlying part of the surface 101 is optically magnified by the Fresnel-type lens. To illuminate the surface 101 the second section 38 is covered with the light extraction layer 50.

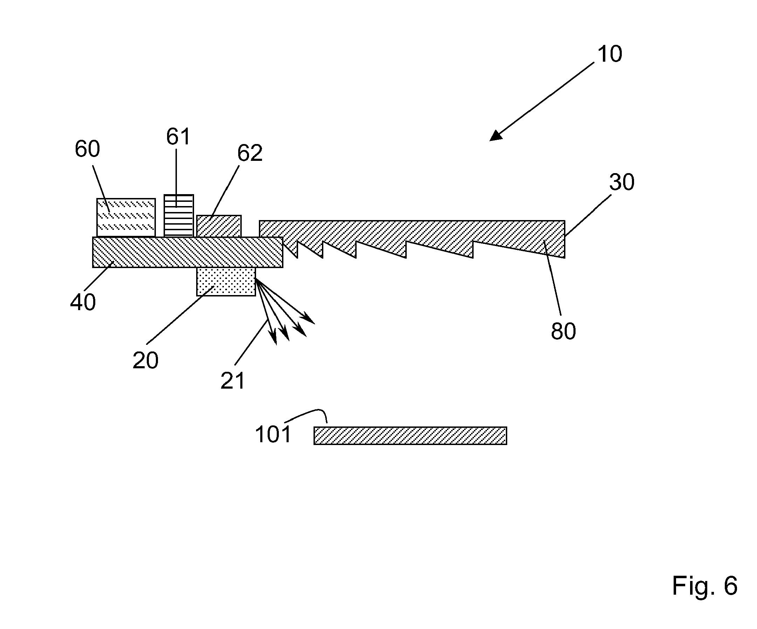

The illumination device 10 shown in Figure 6 comprises a lighting element 20 which is arranged adjacent to the housing element 40. The artificial light 21 emitted by the lighting element 20 is not injected into the illumination body 30. Rather than that, the artificial light 21 directly illuminates the surface 101. Therefore no adaptation between the lighting element 20 and the illuminating body 30 to prevent absorption of the artificial light 21 has to be done. Furthermore an exchange of the lighting element 20 can be done easily and does not need any dissembling of the whole illumination device respectively illuminating body 30.

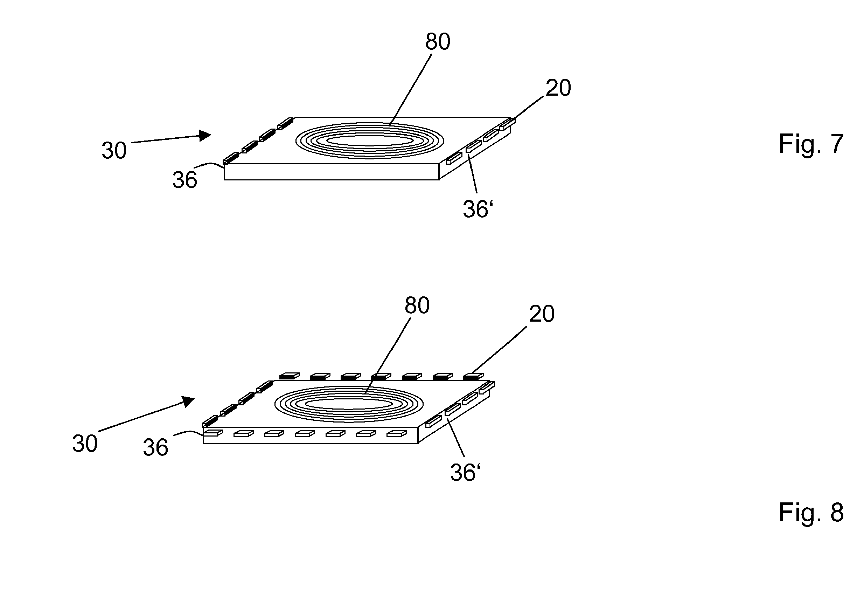

As shown in the Figures 7 and 8 the illuminating device 10 may comprise a plurality of lighting elements 20. Preferably those lighting elements 20 are arranged adjacent to the side faces 36, 36'. In Figure 7 the lighting elements 20 are arranged in two rows, facing each other on the side faces 36, 36'. Another embodiment is shown in Figure 8, where the lighting elements 20 are bordering the whole illumination body 30. Due to the fact, that the needed total light flux is not emitted by one but a plurality of lighting elements 20 the individual light output and therefore the size of each lighting elements 20 can be reduced. Therefore a lean design of the illuminating device 10 respectively illuminating body 30 is realized.

### LIST OF NUMERALS

- 10: illumination device
- 15: illumination gap

- 20: lighting element
- 21, 21 ': artificial light

- 30: illuminating body
- 33: width of the illuminating body 30
- 34: top surface of the illuminating body 30
- 35: bottom surface of the illuminating body 30
- 36,36': side face of the illuminating body 30
- 37: first section
- 38: second section

- 40: housing element

- 50: light extraction layer
- 51: deflection mean
- 52: face of the deflection mean 51
- 53: flange of the deflection mean 51
- 54: angel of the light extraction layer

- 60: solar cell
- 61: battery
- 62: driver

- 80: surface pattern
- 81: refractor mean
- 82: facet of the refractor mean 81
- 83: flange of the refractor mean 81

- 100: object
- 101: surface of object 100

## Claims

1. An illumination device (10) for illuminating a surface (101),
with at least one lighting element (20) and an illuminating body (30), wherein
the lighting element (20) emits an artificial light (21,21'),
a housing element (40) comprises the lighting element (20) and supports the illuminating body (30),
the illuminating body (30) comprises a transparent light conductive material and is generally overlying the surface (101), being illuminated,
**characterized in that**,
the illuminating body (30) comprises a surface pattern (80), forming a Fresnel-type lens, optically magnifying the surface (101).

2. An illumination device (10) according to claim 1,
**characterized in that** the surface pattern (80) comprises a plurality of refractor means (81), preferably that the surface pattern (80) covers one of the surfaces (34,35,36,36') of the illuminating body (30), more preferably that the illuminating body (30) and the surface pattern (80) are one piece.

3. An illumination device (10) according to claim 2,
**characterized in that** each refractor mean (81) is configured on the one hand to optically magnify the surface (101) and on the other hand to receive and to deflect the artificial light (21,21') from the lighting element (20) onto the surface (101).

4. An illumination device (10) according to any preceding claims,
**characterized in that** the surface pattern (80) is transparent for the artificial light (21,21'), reflected by the surface (101), and that the surface pattern (80) is transparent for an ambient light, falling onto the surface pattern (80).

5. An illumination device (10) according to any preceding claims,
**characterized in that** the lighting element (20) is arranged adjacent to a side face (36,36') of the illuminating body (30), preferably that an illumination gap (15) is arranged between the lighting element (20) and the side face (36,36') of the illuminating body (30).

6. An illumination device (10) according to any preceding claims,
**characterized in that** the lighting element (20) is arranged beneath the illuminating body (30).

7. An illumination device (10) according to any preceding claims,
**characterized in that** the illuminating body (30) comprises a light extraction layer (50), configured to receive and to deflect the artificial light (21,21') from the lighting element (20) onto the surface (101), preferably that the light extraction layer (50) comprises a surface structure.

8. An illumination device (10) according to claim 7,
**characterized in that** the illuminating body (30) comprises a first section (37) and a second section (38), wherein at least a part of the first section (37) is covered with the surface pattern (80), and wherein at least a part of the second section (38) is covered with the light extraction layer (50).

9. An illumination device (10) according to any preceding claims,
**characterized in that** the illumination device (10) comprises a plurality of lighting elements (20), arranged adjacent to the side faces (36,36') of the illuminating body (30).

10. A mounting to bear an illumination device (10) according to any preceding claims,
wherein the mounting positions the illumination device (10) in a distance from the surface (101), so that the surface (101) can be viewed magnified.
